# EUROPEAN PATENT APPLICATION

(11) **EP 4 804 278 A1**
(43) Date of publication of application: **09.09.2026**
(21) Application number: 24884118.1
(22) Date of filing: 13.08.2024
(51) Int. Cl.: H01M 10/058

(54) **BATTERY CELL, BATTERY PACK AND ELECTRICAL DEVICE**

(30) Priority: 30.10.2023 CN 202322933156 U
(71) Applicant: BYD Company Limited, Shenzhen, Guangdong 518118 (CN)
(72) Inventor: DUAN, Zhenzhen, Shenzhen, Guangdong 518118 (CN); LEI, Song, Shenzhen, Guangdong 518118 (CN); GUO, Jiawei, Shenzhen, Guangdong 518118 (CN); FENG, Jiamao, Shenzhen, Guangdong 518118 (CN); GUO, Jinxin, Shenzhen, Guangdong 518118 (CN)
(74) Representative: Mathys & Squire
(86) International application number: PCT/CN2024/111670
(87) International publication number: WO 2025/092111

(57) **Abstract**

A battery cell, a battery pack, and an electrical device. The battery cell includes: a housing; an electrode core; and a temperature-sensitive deformable member; wherein the housing defines an accommodation cavity, the electrode core is accommodated in the accommodation cavity, the temperature sensitive deformable member is accommodated in the accommodation cavity and is connected to the electrode core, and, as a temperature of the electrode core increases, at least part of the temperature sensitive deformable member expands so as to approach the housing, and/or at least part of the temperature sensitive deformable member contracts so as to withdraw from the housing.

## Description

### CROSS-REFERENCE TO RELATED APPLICATIONS

The present disclosure claims priority to Chinese Patent Application No. 202322933156.2 filed on October 30, 2023, entitled "BATTERY CELL, BATTERY PACK AND ELECTRICAL DEVICE", which is incorporated herein by reference in its entirety.

### FIELD

The present disclosure relates to the technical field of batteries, in particular to a battery cell, a battery pack and an electrical device.

### BACKGROUND

In existing battery cells, an electrode core is arranged with a PET plate at a position close to the housing, which can play a role in structural fixation. Since the physical properties of the PET plate are uniform, the heat conduction effect of the battery cell is consistent at each temperature state, and in the case of overall overheating or local overheating, the effect of thermal equilibrium cannot be achieved. Especially, under the working condition of large current or large power, due to the structural characteristics of the single battery cell: the current path is from the positive electrode tab to the positive current collector, the positive electrode piece, the separator, the negative electrode piece, the negative current collector, and the negative electrode tab, the current density distribution is uneven, and the electrode core generates heat unevenly; the heat capacity of the internal structural parts of the positive and negative electrodes is small, so the temperature rise is obvious under large current or large power. The above structural characteristics of single battery cells lead to uneven temperature and large temperature difference at different positions in the battery cells, thereby affecting the safety, performance and service life of the whole battery cell.

### SUMMARY

The purpose of the present disclosure is to provide a battery cell, a battery pack and an electrical device, and to solve the problem of uneven internal temperature of the battery cell.

In order to achieve the purpose of the present disclosure, the present disclosure provides the following technical solutions.

In a first aspect, the present disclosure provides a battery cell, the battery cell includes a housing, an electrode core, and a temperature-sensitive deformation member; wherein the housing encloses an accommodation cavity; the electrode core is accommodated in the accommodation cavity; the temperature-sensitive deformation member is accommodated in the accommodation cavity and connected to the electrode core; wherein as a temperature of the electrode core rises, at least a portion of the temperature-sensitive deformation member expands to be close to the housing, and/or at least a portion of the temperature-sensitive deformation member contracts to be away from the housing.

In an embodiment, the temperature-sensitive deformation member includes an expansion section, the expansion section being connected to a side of the electrode core and extending along a length direction of the battery cell, and the expansion section expands as the temperature rises.

In an embodiment, the temperature-sensitive deformation member includes a contraction section, the contraction section being connected to a side of the electrode core and extending along a length direction of the battery cell, and the contraction section contracts as the temperature rises.

In an embodiment, the temperature-sensitive deformation member includes an expansion section and a contraction section, the expansion section and the contraction section being connected in sequence along a length direction of the battery cell; the electrode core including a high-temperature portion and a low-temperature portion, and after the temperature of the electrode core rises, a temperature of the high-temperature portion is higher than a temperature of the low-temperature portion; and the expansion section is connected to a side of the high-temperature portion, the contraction section is connected to a side of the low-temperature portion, wherein the expansion section expands as the temperature rises, and the contraction section contracts as the temperature rises.

In an embodiment, a material of the expansion portion of the temperature-sensitive deformation member is one of graphite, nylon PA66, and silicon nitride.

In an embodiment, a material of the contraction portion of the temperature-sensitive deformation member is one of zirconium tungstate, aramid, carbon fiber, and electrostrictive ceramic.

In an embodiment, a plurality of temperature-sensitive deformation members are included, and at least one temperature-sensitive deformation member is arranged on each of two opposite sides of the electrode core along a width direction of the battery cell.

In an embodiment, a gap is formed between the temperature-sensitive deformation member and the housing to allow the temperature-sensitive deformation member to expand.

In a second aspect, the present disclosure further provides a battery pack, the battery pack includes a shell and a plurality of battery cells according to any of the embodiments of the first aspect, the battery cells are accommodated in the shell, and the plurality of battery cells are arranged in an array.

In an embodiment, the battery pack includes a low-temperature region and a high-temperature region, at least one battery cell is arranged in each of the low-temperature region and the high-temperature region, and a temperature of the battery cell in the low-temperature region is less than or equal to a temperature of the battery cell in the high-temperature region; the low-temperature region includes a first battery cell, the first battery cell includes the temperature-sensitive deformation member with contraction deformation; and the high-temperature region includes a second battery cell, the second battery cell includes the temperature-sensitive deformation member with expansion deformation.

In a third aspect, the present disclosure further provides an electrical device, the electrical device includes an electrical apparatus and the battery pack according to the second aspect, and the battery pack is configured to supply power to the electrical apparatus.

By arranging the temperature-sensitive deformation member which deforms as the temperature of the electrode core rises in the battery cell, the temperature-sensitive deformation member can expand or contract after the temperature of the electrode core rises; the expanded portion of the temperature-sensitive deformation member can be close to the housing to dissipate heat through the housing, thereby improving the heat transfer capacity, and the contracted portion of the temperature-sensitive deformation member can be away from the housing to reduce the heat transfer capacity; the heat transfer capacity in the direction of the housing (cooling surface) of the battery cell can be enhanced or weakened in real time and autonomously, so that the high-temperature portion and the low-temperature portion in the battery cell can reach the effect of uniform temperature through the temperature-sensitive deformation member, and the safety, performance, and service life of the battery cell in the large-current or large-power working condition can be improved.

### BRIEF DESCRIPTION OF THE DRAWINGS

In order to more clearly illustrate the technical solutions in the embodiments of the present disclosure or in the prior art, the following briefly describes the accompanying drawings that are needed in the description of the embodiments or the prior art. Obviously, the following accompanying drawings in the description are only some of the embodiments of the present disclosure, and other drawings can be obtained according to these drawings by a person skilled in the art without creative effort.
FIG. 1 is an exploded structural diagram of a battery cell according to an embodiment;
FIG. 2 is an exploded structural diagram of a battery cell according to another embodiment;
FIG. 3 is an exploded structural diagram of a battery cell according to still another embodiment;
FIG. 4 is an appearance structural diagram of a battery pack according to an embodiment;
FIG. 5 is a top view of a battery pack according to an embodiment.

Explanation of reference numerals:
10-battery cell, 11-housing, 12-electrode core, 121-high-temperature portion, 122-low-temperature portion, 13-temperature-sensitive deformation member, 131-expansion section, 132-contraction section
100-battery pack, 101-low-temperature region, 102-high-temperature region, 10A-first battery cell, 10B-second battery cell, 20-shell
X-length direction, Y-width direction, Z-thickness direction

### DETAILED DESCRIPTION

The technical solutions in the embodiments of the present disclosure will be clearly and completely described below in combination with the accompanying drawings in the embodiments of the present disclosure. Obviously, the described embodiments are only some of the embodiments of the present disclosure, rather than all the embodiments. Based on the embodiments in the present disclosure, all the other embodiments obtained by a person skilled in the art without creative effort fall within the scope of protection of the present disclosure.

It will be noted that when a component is referred to as being "fixed on" another component, it can be directly on the other component or intervening components can also be present. When a component is referred to as being "connected to" another component, it can be directly connected to the other component or intervening components can be present.

Unless otherwise defined, all technical and scientific terms used herein have the same meaning as commonly understood by a person skilled in the art to which the present disclosure belongs. The terminology used in the description of the present disclosure herein is for the purpose of describing particular embodiments only and is not intended to be limiting of the application. As used herein, the term "and/or" includes any and all combinations of one or more of the associated listed items.

Some embodiments of the present disclosure will be described in detail below with reference to the accompanying drawings. The following embodiments and features in the embodiments may be combined with each other without conflict.

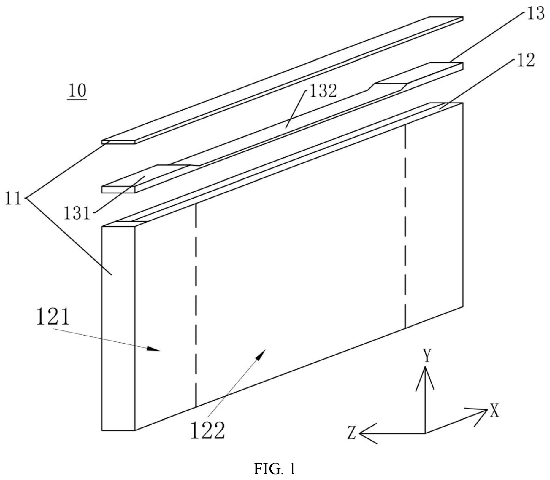

The present disclosure provides a battery cell 10, referring to FIG. 1 to FIG. 3, the battery cell 10 includes a housing 11, an electrode core 12, and a temperature-sensitive deformation member 13; wherein the housing 11 encloses an accommodation cavity; the electrode core 12 is accommodated in the accommodation cavity; the temperature-sensitive deformation member 13 is accommodated in the accommodation cavity and connected to the electrode core 12; wherein as a temperature of the electrode core 12 rises, at least a portion of the temperature-sensitive deformation member 13 expands to be closer to the housing 11, and/or at least a portion of the temperature-sensitive deformation member 13 contracts to be away from the housing 11.

Specifically, the battery cell 10 provided in the present disclosure can be a hexahedral battery cell 10 or a cylindrical battery cell 10.

In an embodiment, the housing 11 can be an aluminum housing and enclose the accommodation cavity, and the accommodation cavity is configured to accommodate the electrode core 12 and the temperature-sensitive deformation member 13. The shape of the housing 11 is the appearance shape of the battery cell 10; for example, the housing 11 is hexahedral or cylindrical.

In an embodiment, the electrode core 12 is a main power generation device in the battery cell 10 and can include a positive electrode piece, a negative electrode piece, and a separator. The positive electrode piece is not limited in type and can be a lithium-ion positive electrode piece, a sodium-ion positive electrode piece, etc.

In an embodiment, the temperature-sensitive deformation member 13 can be a flat plate structure and connected to the side of the electrode core 12. The temperature-sensitive deformation member 13 can deform as the temperature of the electrode core 12 rises. The deformation mode can be expansion deformation or contraction deformation.

It will be understood that the deformation characteristics of the temperature-sensitive deformation member 13 mainly come from the material used for manufacturing. When a material with thermal expansion characteristics is used for manufacturing, the temperature-sensitive deformation member 13 can have expansion characteristics; when a material with thermal contraction characteristics is used for manufacturing, the temperature-sensitive deformation member 13 can have contraction characteristics.

In an embodiment, the temperature-sensitive deformation member 13only has expansion characteristics, i.e., the temperature-sensitive deformation member 13 is only made of a thermal expansion material; or the temperature-sensitive deformation member 13 only has contraction characteristics, i.e., the temperature-sensitive deformation member 13 is only made of a thermal contraction material.

In an embodiment, the temperature-sensitive deformation member 13 can have both expansion characteristics and contraction characteristics, i.e., the temperature-sensitive deformation member 13 is made of both an expansion material and a contraction material, and different portions of the temperature-sensitive deformation member 13 show different deformations.

Further, the temperature-sensitive deformation member 13 is arranged between the electrode core 12 and the housing 11, so that after the temperature-sensitive deformation member 13 expands, the temperature-sensitive deformation member 13 is closer to the housing 11 compared to before expansion, and after the temperature-sensitive deformation member 13 contracts, the temperature-sensitive deformation member 13 is farther away from the housing 11 compared to before contraction.

It will be understood that the expanded temperature-sensitive deformation member 13 is close to the housing 11 (cooling surface), so that the heat generated in the electrode core 12 can be quickly conducted to the housing 11 through the temperature-sensitive deformation member 13 and transferred to the outside through the housing 11, thereby achieving heat dissipation. The contracted temperature-sensitive deformation member 13 is away from the housing 11, so that the heat generated in the electrode core 12 is kept in the electrode core 12, thereby achieving heat preservation.

It will be understood that a gap can be between the temperature-sensitive deformation member 13 and the housing 11, and the gap can be configured for expansion of the temperature-sensitive deformation member 13.

The temperature-sensitive deformation member 13 which deforms as the temperature of the electrode core 12 rises is arranged in the battery cell 10, and after the temperature of the electrode core 12 rises, the temperature-sensitive deformation member 13 can expand or contract. The expanded portion of the temperature-sensitive deformation member 13 can be close to the housing 11 to dissipate heat through the housing 11, thereby improving the heat transfer capacity, and the contracted portion of the temperature-sensitive deformation member 13 can be away from the housing 11 to reduce the heat transfer capacity. The heat transfer capacity in the direction of the housing 11 (cooling surface) of the battery cell 10 is enhanced or weakened in real time and autonomously, so that a high-temperature portion 121 and a low-temperature portion 122 in the battery cell 10 can reach the effect of uniform temperature through the temperature-sensitive deformation member 13, and the safety, performance and service life of the battery cell 10 in the large-current or large-power working condition are improved.

In an embodiment, the battery cell 10 can further include a PET side plate, and the temperature-sensitive deformation member 13 is compounded on the PET side plate.

In an embodiment, the battery cell 10 does not include the PET side plate, and the temperature-sensitive deformation member 13 is configured to undertake the support and protection functions of the PET side plate.

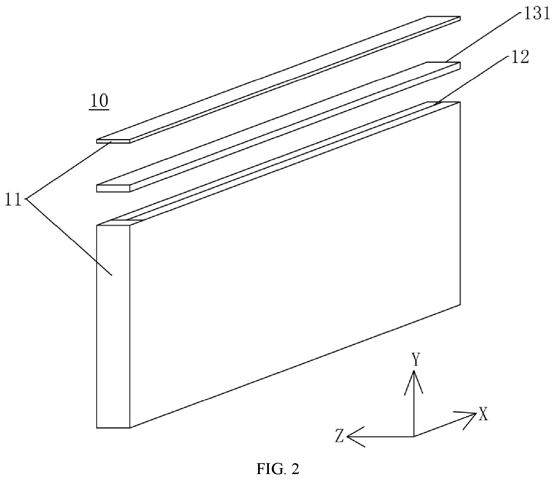

In an embodiment, referring to FIG. 2, the temperature-sensitive deformation member 13 includes an expansion section 131, the expansion section 131 is connected to a side of the electrode core 12 and extends along a length direction X of the battery cell 10, and the expansion section 131 expands as the temperature rises.

Specifically, the battery cell 10 can be a hexahedral battery cell 10 (a blade battery cell 10). The battery cell 10 includes a length direction X, a width direction Y and a thickness direction Z. The electrode core 12 includes a first side intersecting with the width direction Y, and the temperature-sensitive deformation member 13 is connected to the first side.

In an embodiment, the temperature-sensitive deformation member 13 only includes the expansion section 131, i.e., the temperature-sensitive deformation member 13 is made of a thermal expansion material. The expansion section 131 extends along the length direction X of the battery cell 10, thereby forming a rectangular flat plate structure.

In an embodiment, the expansion section 131 expands as the temperature of the electrode core 12 rises, thereby transferring heat to the housing 11.

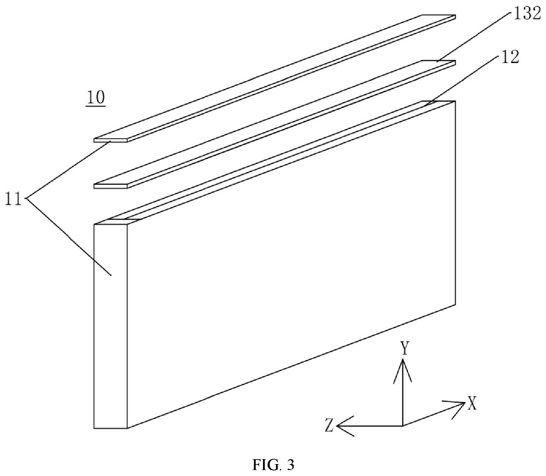

In an embodiment, referring to FIG. 3, the temperature-sensitive deformation member 13 includes a contraction section 132, the contraction section 132 is connected to a side of the electrode core 12 and extends along the length direction X of the battery cell 10, and the contraction section 132 contracts as the temperature rises.

Specifically, the temperature-sensitive deformation member 13 only includes the contraction section 132, i.e., the temperature-sensitive deformation member 13 is made of a thermal contraction material. The contraction section 132 extends along the length direction X of the battery cell 10, thereby forming a rectangular flat plate structure.

In an embodiment, the contraction section 132 expands as the temperature of the electrode core 12 rises, thereby keeping heat to the battery cell 10.

In an embodiment, referring to FIG. 1, the temperature-sensitive deformation member 13 includes the expansion section 131 and the contraction section 132, the expansion section 131 and the contraction section 132 are connected in sequence along the length direction X of the battery cell 10; the electrode core 12 includes a high-temperature portion 121 and a low-temperature portion 122, after the temperature of the core 12 rises, the temperature of the high-temperature portion 121 is higher than the temperature of the low-temperature portion 122; the expansion section 131 is connected to the side of the high-temperature portion 121, and the contraction section 132 is connected to the side of the low-temperature portion 122, the expansion section 131 expands as the temperature rises, and the contraction section 132 contracts as the temperature rises.

Specifically, during use of the battery cell 10, different portions of the electrode core 12 generate different amounts of heat, so that the electrode core 12 as a whole has different temperatures at different portions. Therefore, the electrode core 12 can be divided into the high-temperature portion 121 and the low-temperature portion 122, wherein the temperature of the high-temperature portion 121 is higher than the temperature of the low-temperature portion 122. Specifically, the high temperature portion 121 generates a large amount of heat, resulting in a faster temperature rise, while the low temperature portion 122 generates a small amount of heat, resulting in a slower temperature rise. As a result, the electrode core 12 as a whole has uneven temperature distribution.

In an embodiment, taking the hexahedral battery cell 10 (the blade battery cell 10) as an example, the electrode core 12 has the high-temperature portion 121 at each of two ends in the length direction X and the low-temperature portion 122 in the middle, as shown in FIG. 1. Because the two ends of the electrode core 12 are where the tabs are located and are the main interface for charging and discharging, a large amount of heat is generated, so that the temperature is relatively high.

Further, the expansion section 131 is arranged at the high-temperature portion 121, and the contraction section 132 is arranged at the low-temperature portion 122. As shown in FIG. 1, the temperature-sensitive deformation member 13 can have a three-section structure, and the expansion section 131, the contraction section 132, and another expansion section 131 are arranged in sequence along the length direction X. In addition, in the width direction Y of the battery cell 10, the projections of the expansion section 131 and the high-temperature portion 121 overlap, and the projections of the contraction section 132 and the low-temperature portion 122 overlap.

In an embodiment, the length (dimension in the length direction X of the battery cell 10) of the expansion section 131 can be less than or equal to the length of the contraction section 132. It will be understood that the length of the expansion section 131 and the length of the contraction section 132 are not specifically limited, and can be designed according to the specific heat generation of the battery cell 10 and the use conditions.

In an embodiment, the expansion section 131 and the contraction section 132 can be of an integrated structure. Alternatively, the expansion section 131 and the contraction section 132 can be of a split structure.

By arranging the temperature-sensitive deformation member 13 having the expansion section 131 and the contraction section 132 in the battery cell 10, the temperature-sensitive deformation member 13 can produce different deformation effects according to different temperature portions of the electrode core 12, thereby achieving the uniform temperature effect of the battery cell 10.

In an embodiment, the material of the expansion portion of the temperature-sensitive deformation member 13 is one of graphite, nylon PA66, silicon nitride, and Ni-Ti-Cu two-way shape memory alloy (50.1wt.% Ni, 44.9 wt.%Ti, and 5 wt.%Cu).

In an embodiment, the material of the contraction portion of the temperature-sensitive deformation member 13 is one of zirconium tungstate, aramid, carbon fiber, electrostrictive ceramic, and Ni-Ti-Cu two-way shape memory alloy (50.1 wt.% Ni, 44.9 wt.%Ti, 5 wt.%Cu).

In an embodiment, a plurality of temperature-sensitive deformation members 13 are included, and at least one temperature-sensitive deformation member 13 is arranged on each of the two opposite sides of the electrode core 12 along the width direction Y of the battery cell 10. Specifically, two temperature-sensitive deformation members 13 can be included, and respectively arranged on each of the two opposite sides of the electrode core 12.

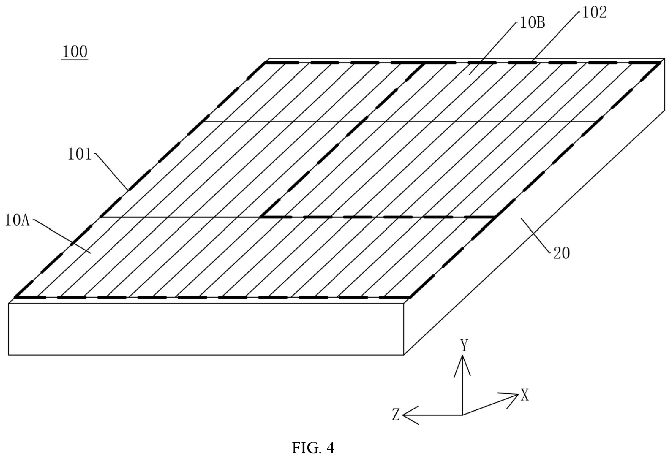

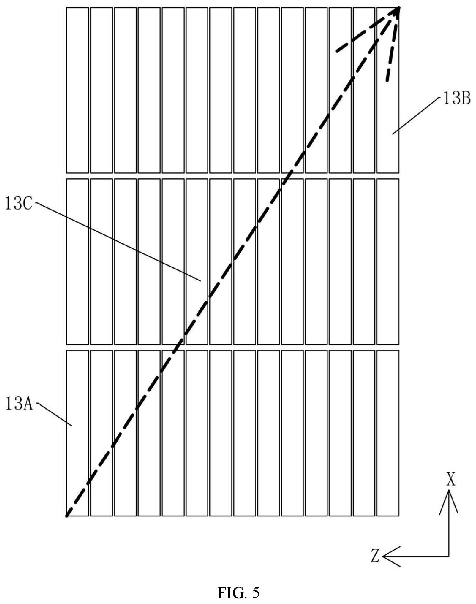

In an embodiment, referring to FIG. 4 and FIG. 5, the present disclosure further provides a battery pack 100, the battery pack 100 includes a shell 20 and a plurality of battery cells 10 according to the above embodiments, the battery cells 10 are accommodated in the shell 20, and the plurality of battery cells 10 are arranged in an array.

In an embodiment, referring to FIG. 4 and FIG. 5, the battery pack 100 includes a low-temperature region 101 and a high-temperature region 102, and at least one battery cell 10 is arranged in each of the low-temperature region 101 and the high-temperature region 102, and the temperature of the battery cell 10 in the low-temperature region 101 is less than or equal to the temperature of the battery cell 10 in the high-temperature region 102; the low-temperature region 101 includes a first battery cell 10A, and the first battery cell 10A includes the temperature-sensitive deformation member 13 with the contraction deformation; and the high-temperature region 102 includes a second battery cell 10B, and the second battery cell 10B includes the temperature-sensitive deformation member 13 with the expansion deformation.

Specifically, during use of the battery pack 100, the battery cells 10 at different positions of the battery pack 100 generate different amounts of heat, so that the battery pack 100 has different temperatures at different positions. Therefore, the battery pack 100 can be divided into the high-temperature region 102 and the low-temperature region 101, and the temperature of the high-temperature region 102 is higher than the temperature of the low-temperature region 101; specifically, the high-temperature region 102 generates a large amount of heat, resulting in a faster temperature rise, and the low-temperature region 101 generates a small amount of heat, resulting in a slower temperature rise. Thus, the battery pack 100 has uneven temperature distribution.

In an embodiment, as shown in FIG. 4, the low-temperature region 101 includes a plurality of first battery cells 10A, and the high-temperature region 102 includes a plurality of second battery cells 10B. In order to ensure that the temperature difference between the first battery cell 10A in the high-temperature region 102 and the second battery cell 10B in the high-temperature region 102 is reduced, the temperature-sensitive deformation member 13 (thermal contraction material) with the contraction deformation is arranged in the first battery cell 10A, and the temperature-sensitive deformation member 13 (thermal expansion material) with the expansion deformation is arranged in the second battery cell 10B.

It will be understood that, due to the temperature distribution difference of the battery pack 100, the first battery cell 10A with the lowest temperature is included in the low-temperature region 101, i.e., the temperature of the battery cell 10 is lower than the temperature of the second battery cell 10B with the lowest temperature in the high-temperature region 102, and lower than the temperature of the first battery cell 10A with the highest temperature in the low-temperature region 101. Therefore, in the first battery cell 10A with the lowest temperature, the temperature-sensitive deformation member 13 can be completely the contracted section 132, i.e., the heat release is slowed down.

The second battery cell 10B with the highest temperature is included in the high-temperature region 102, i.e., the temperature of the battery cell 10 is higher than the temperature of the first battery cell 10A with the highest temperature in the low-temperature region 101 and higher than the temperature of the second battery cell 10B with the lowest temperature in the high-temperature region 102. Therefore, in the second battery cell 10B with the lowest temperature, the temperature-sensitive deformation member 13 can be completely the expansion section 131, i.e., the heat release is accelerated.

In the battery cells 10 in the low-temperature region 101 and the high-temperature region 102, the temperature-sensitive deformation member 13 in the battery cell 10 can also simultaneously include the expansion section 131 and the contraction section 132, and the structures of the expansion section 131 and the contraction section 132 are as described in the above embodiments, which will not be repeated here.

Therefore, the same battery pack 100 can include the following three types of temperature-sensitive deformation members 13, i.e., a temperature-sensitive deformation member 13A composed of only the contraction section 132, a temperature-sensitive deformation member 13B composed of only the expansion section 131, and a temperature-sensitive deformation member 13C composed of both the expansion section 131 and the contraction section 132.

For example, as shown in FIG. 5, the temperature-sensitive deformation members 13A, 13B, and 13C can be distributed as follows: the temperature-sensitive deformation members 13A, 13B, and 13C are arranged in sequence in the direction of the arrow; and the direction indicated by the arrow is the direction in which the temperature in the battery pack 100 rises (the starting point of the arrow is the low-temperature region 101, and the end point is the high-temperature region 102).

In an embodiment, in the battery cells 10 at different positions, the expansion section 131 and the contraction section 132 in the temperature-sensitive deformation member 13C have different lengths. It will be understood that, the closer to the central region of the high-temperature region 102, the more heat is generated by the battery cell 10, so more expansion sections 131 are needed for heat dissipation; the closer to the central region of the low-temperature region 101, the less heat is generated by the battery cell 10, so more contraction sections 132 are needed for heat preservation.

By arranging the temperature-sensitive deformation members 13 with different deformation effects in the high-temperature region 102 and the low-temperature region 101 of the battery pack 100, the battery cells 10 at different positions of the battery pack 100 can have different heat management capabilities, the heat transfer capability in the direction of the housing 11 (cooling surface) of the battery cell 10 is autonomously enhanced or weakened, the battery pack 100 achieves the effect of uniform temperature through the temperature-sensitive deformation members 13 in the battery cell 10, and the safety, performance, and service life of the battery pack 100 in the large-current or large-power working condition are improved.

In an embodiment, the present disclosure also provides an electrical device, the electrical device includes an electrical apparatus and the battery pack 100 according to the above embodiments or the battery cell 10 according to the above embodiments, and the battery pack 100 or the battery cell 10 is configured to supply power to the electrical apparatus.

In the description of the embodiments of the present disclosure, it will be explained that the terms "center", "upper", "lower", "left", "right", "vertical", "horizontal", "inner", "outer" and the like refer to the orientation or positional relationship based on the drawings, and are only used to facilitate the description of the present disclosure and simplify the description, and do not indicate or imply that the device or element referred to must have a specific orientation, be constructed and operated in a specific orientation, and therefore will not be understood as limiting the present disclosure.

The above disclosure is only a preferred embodiment of the present disclosure, and of course cannot be used to limit the scope of the present disclosure. A person skilled in the art will understand that all or part of the processes of the above embodiments can be implemented and equivalent changes made according to the claims of the present disclosure still fall within the scope of the present disclosure.

## Claims

1. A battery cell (10), comprising:
a housing (11) enclosing an accommodation cavity;
an electrode core (12) accommodated in the accommodation cavity; and
a temperature-sensitive deformation member (13) accommodated in the accommodation cavity and connected to the electrode core (12); as a temperature of the electrode core (12) rises, at least a portion of the temperature-sensitive deformation member (13) expanding to be close to the housing (11), and/or at least a portion of the temperature-sensitive deformation member (13) contracting to be away from the housing (11).

2. The battery cell (10) according to claim 1, wherein the temperature-sensitive deformation member (13) comprises an expansion section (131), the expansion section (131) being connected to a side of the electrode core (12) and extending along a length direction (X) of the battery cell (10), and the expansion section (131) expands as the temperature rises.

3. The battery cell (10) according to claim 1, wherein the temperature-sensitive deformation member (13) comprises a contraction section (132), the contraction section (132) being connected to a side of the electrode core (12) and extending along a length direction (X) of the battery cell (10), and the contraction section (132) contracts as the temperature rises.

4. The battery cell (10) according to claim 1, wherein the temperature-sensitive deformation member (13) comprises an expansion section (131) and a contraction section (132), the expansion section (131) and the contraction section (132) being connected in sequence along a length direction (X) of the battery cell (10);
the electrode core (12) comprising a high-temperature portion (121) and a low-temperature portion (122), and after the temperature of the electrode core (12) rises, a temperature of the high-temperature portion (121) is higher than a temperature of the low-temperature portion (122); and
the expansion section (131) being connected to a side of the high-temperature portion (121), the contraction section (132) being connected to a side of the low-temperature portion (122), the expansion section (131) expanding as the temperature rises, and the contraction section (132) contracting as the temperature rises.

5. The battery cell (10) according to any one of claims 1 to 4, wherein a material of the expansion portion of the temperature-sensitive deformation member (13) is one of graphite, nylon PA66, and silicon nitride.

6. The battery cell (10) according to any one of claims 1 to 5, wherein a material of the contraction portion of the temperature-sensitive deformation member (13) is one of zirconium tungstate, aramid, carbon fiber, and electrostrictive ceramic.

7. The battery cell (10) according to any one of claims 1 to 6, comprising a plurality of temperature-sensitive deformation members (13), and at least one temperature-sensitive deformation member (13) being arranged on each of two opposite sides of the electrode core (12) along a width direction (Y) of the battery cell (10).

8. The battery cell (10) according to any one of claims 1 to 7, wherein a gap is formed between the temperature-sensitive deformation member (13) and the housing (11) to allow the temperature-sensitive deformation member (13) to expand.

9. A battery pack (100), comprising a shell (20) and a plurality of battery cells (10) according to any one of claims 1 to 8, the battery cells (10) being accommodated in the shell (20), and the plurality of battery cells (10) being arranged in an array.

10. The battery pack (100) according to claim 9, comprising a low-temperature region (101) and a high-temperature region (102), at least one battery cell (10) being arranged in each of the low-temperature region (101) and the high-temperature region (102), and a temperature of the battery cell (10) in the low-temperature region (101) being less than or equal to a temperature of the battery cell (10) in the high-temperature region (102);
the low-temperature region (101) comprising a first battery cell (10A), the first battery cell (10A) comprising the temperature-sensitive deformation member (13) with contraction deformation; and
the high-temperature region (102) comprising a second battery cell (10B), the second battery cell (10B) comprising the temperature-sensitive deformation member (13) with expansion deformation.

11. An electrical device, comprising an electrical apparatus and the battery pack (100) according to claim 9 or 10, and the battery pack (100) being configured to supply power to the electrical apparatus.
